# EUROPÄISCHE PATENTSCHRIFT

(11) **EP 1 989 266 B1**
(45) Veröffentlichungstag und Bekanntmachung des Hinweises auf die Patenterteilung: **14.12.2011**
(21) Anmeldenummer: 07703128.4
(22) Anmeldetag: 30.01.2007
(51) Int. Cl.: C09D 9/00

(54) **ZWEI- ODER MEHRSTUFIGES ENTLACKUNGSVERFAHREN**
TWO-STAGE OR MULTI-STAGE PAINT STRIPPING PROCESS
PROCEDE D'ELIMINATION DE PEINTURE EN DEUX ETAPES OU PLUS

(30) Priorität: 15.02.2006 DE 102006007246
(43) Veröffentlichungstag der Anmeldung: 12.11.2008
(73) Patentinhaber: Henkel AG & Co. KGaA, 40589 Düsseldorf (DE)
(72) Erfinder: BASTIAN, Marco, 40625 Düsseldorf (DE); SCHLAICH, Bernd, 72351 Geislingen (DE)
(86) Internationale Anmeldenummer: PCT/EP2007/000773
(87) Internationale Veröffentlichungsnummer: WO 2007/093278

(56) Entgegenhaltungen:
- DE-A1- 4 440 353
- DE-A1- 10 014 579
- DE-A1- 19 861 133
- DE-C- 842 106

## Beschreibung

Die vorliegende Erfindung betrifft ein Verfahren zur zwei- oder mehrstufigen Abreinigung (= "Entlacken") von Farben, Lacken und anderen organischen Verbindungen von insbesondere metallischen Bauteilen unter Verwendung von chemischen Ent-lackungsmitteln. (Im Folgenden werden die Begriffe "Entschichten" und "Entlacken" und hiervon abgeleitete Begriffe synonym verwendet.)

Die lackierende Industrie steht, u.a. auf Grund wachsender Qualitätsanforderungen, zunehmend vor dem Problem der Entschichtung von Lackierhilfsmitteln wie beispielsweise Gestellen und Fördereinrichtungen und fehlbeschichteten Produktionsteilen. Speziell bei Werkstücken, die einen unterschiedlichen und mehrlagigen Schichtaufbau besitzen und auf Grund der Werkstoffeigenschaften nur nach chemischem Verfahren entschichtet werden können (z.B. Leichtmetallräder) liegen die Schwierigkeiten beim Entschichten darin, dass die zu entfernenden Beschichtungsstoffe unterschiedlich aufgebaut sind und dadurch auch unterschiedlich auf die Entschichtungschemikalien reagieren und durch den mehrlagigen Aufbau eine relativ hohe Beschichtungsmenge abgereinigt werden muss, die einen hohen Verbrauch an Entschichtungschemikalien und lange Entschichtungszeiten zur Folge hat.

Die chemische Entschichtung von z.B. Leichtmetallrädern erfolgt heute konventionell im Tauchbad auf Basis von heißer Schwefelsäure oder heißen Lösemittelgemischen mit einem anschließenden manuellen Abspritzvorgang. Diese Verfahren gehen einher mit relativ großen Volumina wassergefährdender Stoffe und in der Regel auch mit körperlichen Anstrengungen und Belastungen. Die o.g. chemischen Entschichtungsverfahren sind sehr platzintensiv und erfordern neben der manuellen Arbeitsbelastung einen relativ hohen Aufwand an Primär- und Sekundäranlagen, weshalb diese Aufgabe vorwiegend durch professionelle Dienstleister an zentralen Entschichtungsstandorten erledigt wird. Dadurch sind zusätzlich große logistische Nebenaufgaben zu bewältigen.

Die Erfindung schlägt vor, dass zur Entschichtung der mit Farbe, Lack und anderen organischen Beschichtungen verunreinigten Werkstücken, Werkzeugen, Hilfsmittel oder Vorrichtungen ein Gesamtreinigungsvorgang bestehend aus mindestens zwei aufeinander folgende Entschichtungsverfahrensschritten vorgenommen wird. Die einzelnen Verfahrenschritte können entweder in einzelnen Chargenanlagen oder in vollautomatischen Durchlaufanlagen vorgenommen werden. Darüber hinaus ist die Erfindung geeignet, beim Anwender einfach und dezentral in die Produktion eingegliedert zu werden.

Als Beschichtungsmittel werden im Sinne der Anmeldung Lacke, Pulverlacke, Farben oder ähnliche Beschichtungen auf Teilen verstanden. Diese werden in der folgenden Beschreibung in der Regel unter dem Begriff "Lack" summarisch zusammengefasst.

Zum Entlacken von insbesondere metallischen Gegenständen sind vielfältige Entlackungsmittel auf wässriger Basis oder auf Basis von organischen Lösungsmitteln bekannt. Deren Wirkung beruht auf unterschiedlichen Mechanismen. Organische Lösungsmittel können in die Lackschichten eindiffundieren, diese aufquellen und zum Abplatzen von der Unterlage bringen. Reaktive Entlackungsmittel wie beispielsweise stark sauer oder stark alkalisch eingestellte Mittel können mit dem Bindersystem des Lacks reagieren und dieses chemisch spalten. Hierdurch wird die Bindemittel-Matrix aufgelöst, so dass die Lackschicht zerfällt. Bei dieser chemischen Reaktion werden Wirkstoffe wie beispielsweise Alkalien verbraucht.

Entlackungsmittel, die zum Entlacken von Gegenständen aus chemisch reaktiven Metallen wie beispielsweise Aluminium oder Magnesium eingesetzt werden sollen, dürfen die Oberflächen dieser Metalle nach dem Entlacken nicht chemisch angreifen. Für diesen Zweck werden daher wasserfreie oder zumindest wasserarme Entlackungsmittel eingesetzt. Diese können zusätzlich Korrosionsinhibitoren für die genannten Metalle wie beispielsweise Silikate enthalten.

In der Regel enthalten Entlackungsmittel sowohl Wirkstoffe, die in die Lackschicht eindringen und diese Aufquellen, als auch solche, die das Bindemittel durch chemischen Angriff aufspalten. DE-A-10014579 enthält hierzu folgende Informationen:
"Es ist bekannt, für die Entlackung/Entschichtung von Teilen zweiphasige wässrigalkalische Entlackungsmittel zu verwenden. Diese Entlackungsmittel bestehen aus Natron- oder Kalilauge und einem Gemisch aus hochsiedenden Komponenten der Klassen Alkohole, Glykole, Glykolether und anderen Hochsiedern.

Beim Einsatz dieser Entlackungsmittel teilt sich die Beckenfüllung eines Entlackungsbeckens in eine untere Phase, bestehend aus wässriger Lauge und darin gelösten organischen Lösungsmitteln bis zur Sättigungskonzentration und einer oberen Phase, bestehend aus organischen Lösungsmitteln, die mit Natron- oder Kalilauge gesättigt sind. Der Volumenanteil dieser unteren Phase liegt üblicherweise bei 30% bis 80%. In dieser unteren, wässrigen Phase beruht die Entlackungswirkung auf einer Kombination von Verseifung und Quellung. Die Verseifung ist eine hydrolytische Spaltung der im Lack enthaltenen Bindemittel, beispielsweise Fettsäuren, Öle oder dgl. insbesondere im alkalischen Milieu, bei der die als so genannte Seifen bekannten Alkalisalze der entsprechenden Bindemittel im Lack entstehen. Bei der Quellung von Lacken in flüssigen Medien vergrößert sich deren Volumen durch Aufnahme von Flüssigkeit, bis schließlich die quellende Substanz, also der Lack, sich verflüssigt. Bei der Entlackung bildet sich in der Regel Entlackungsschlamm, der meist auf den Beckengrund des Entlackungsbeckens absinkt.

In der oberen Phase der Beckenfüllung findet der Angriff des Entlackungsmittels vorwiegend per Quellung statt. Die Verseifung ist hierbei von untergeordneter Bedeutung. Dies führt dazu, dass sich Bindemittel der abgelösten Pulverlacke/Nasslacke im Entlackungsmittel lösen. Als direkte Folge hiervon ergibt sich eine Anreicherung dieser Bindemittel (Harze) im Entlackungsmittel. Die Entlackungswirkung dieser oberen Phase lässt mit zunehmender Harzkonzentration nach und muss dann ausgetauscht werden.

Das (gemäß dieser DE-A-10014579) verbesserte Verfahren zeichnet sich dadurch aus, dass das Beschichtungsmittel durch Eintauchen der damit beschichteten Teile in ein Abbeizbad aus während des Abbeizens annähernd gleich bleibend gesättigter Lösung von organischer Phase in der wässrigen Phase entfernt wird, wobei eine kontinuierliche Phase im Abbeizbad ausschließlich durch die wässrige Phase gebildet wird. Im Abbeizbad liegt die organische Phase also nicht als kontinuierliche Phase vor, sondern als in der wässrigen Phase gelöste Organik. Dadurch wird verhindert, dass es zu einer Zweischichtung, also einer Phasentrennung in eine organische und eine wässrige Schicht im Abbeizbad kommt. Vorzugsweise bildet die wässrige Phase und die darin gelöste Organik eine homogene Mischung.

Vor allem in einer kontinuierlichen organischen Phase, wie sie bei vergleichbaren herkömmlichen Abbeizverfahren auftritt, kommt es zu einer starken Beeinträchtigung der Abbeizwirkung durch Verharzung der organischen Phase des Abbeizmittels. Dies führt dazu, dass das Abbeizmittel relativ oft ausgetauscht werden muss. Das verbesserte Verfahren bietet demgegenüber zum einen ein gutes Abbeizen der Beschichtungsmittel und zum anderen ein Einsparen von Abbeizmittel.

Beim verbesserten Verfahren können zur Aufrechterhaltung der gesättigten Lösung der organischen Phase in der wässrigen Phase organische Phase und wässrige Phase miteinander vermischt werden. Die Vermischung von organischer und wässriger Phase kann innerhalb und/oder außerhalb des Abbeizbades stattfinden. Beim Vermischen kann mindestens eine Phase in dispergierter Form vorliegen. Organische Phase und wässrige Phase können dabei eine heterogene Mischung bilden. Das bevorzugte Vermischen im Bad kann mittels Hindurchleiten von organischem Lösungsmittel in disperser Form, insbesondere in Tropfenform, durch die kontinuierliche wässrige Phase erfolgen. Die Tropfen der dispersen organischen Lösungsmittel können aufgrund der geringeren Dichte der organischen Lösungsmittel gegenüber der wässrigen Phase nach oben steigen und sich dabei in der wässrigen Phase lösen. Die kontinuierliche wässrige Phase nimmt dabei vorzugsweise soviel organische Phase auf, bis ihre Sättigungskonzentration erreicht ist. Es ist auch möglich, dass sich ein Teil der kontinuierlichen wässrigen Phase in der dispersen organischen Phase löst. Ungelöste disperse organische Phase kann an die Oberfläche des Abbeizbades aufsteigen und über den Überlauf in einen Vorrat zurückfließen."

DE-A-19861133 schlägt vor, dass zur Reinigung der mit Farbe und Lacken und sonstigen organischen Beschichtungen verunreinigten Werkzeuge, Hilfsmittel, Vorrichtungen oder sonstigen Gegenstände ein Gesamtreinigungsvorgang, bestehend aus den beiden Verfahrensschritten Reinigen und Spülen vorgenommen wird, wobei beide Arbeitsgänge in einer Einmodulanlage integriert sind. Zur Reinigung wird ein Reinigungsmittel verwendet, das ausschließlich aus Glykolethern besteht. Diesem Reinigungsmittel werden zur Steigerung der Reinigungskraft alkalitätliefernde Zusätze zugegeben. Zum Spülen wird ein flüchtiges Kohlenwasserstoffmedium verwendet, welches sich mit dem Glykolether-Lösemittelgemisch nicht vermischt, rückstandsfrei abtrocknet und durch Phasentrennung zurückgewonnen werden kann.

Die Offenbarung der DE-A-19861133 fährt fort: "Bei dem Verfahrensschritt Reinigen wird ein Lösemittelgemisch eingesetzt, das ausschließlich aus Glykolether besteht. Zur Steigerung der Reinigungswirkung werden alkalitätliefernde Zusätze, vorzugsweise Alkalimetallhydroxide und/oder Alkanolamine nach Bedarf zugegeben. Die Auflösung alkalitätliefernder Zusätze wird durch den Spritzvorgang erheblich beschleunigt. Hierdurch werden die schwerlöslichen Zusätze erst in wirtschaftlich sinnvoller Weise aufgelöst. Durch das Hinzufügen dieser Zusätze wird das dabei unter Umständen entstehende unerwünschte Reaktionsprodukt Wasser durch den Spritzvorgang schnell verdampft und über die Anlagenentlüftung ausgetragen. Damit kann das Entstehen einer Lauge, welches für verschiedene Metallarten schädlich wäre, vermieden werden. Die verwendeten Glykolether-Lösemittelgemische können aufgrund ihrer Eigenschaft, über hohe Siede- und Flammpunkte zu verfügen, auch in hohen Temperaturbereichen weit über 100°C ohne Explosionsgefahr eingesetzt werden. Eine höhere Temperatur beschleunigt zusätzlich den Reinigungsprozess erheblich oder ermöglicht sogar erst die Reinigung. Nach dem Verfahrensschritt Reinigen müssen die Teile noch von den anhaftenden Reinigungsmittelresten abgewaschen werden. Dies erfolgt in dem anschließenden Verfahrensschritt Spülen. Als Nachspülmittel wird hierbei ein flüchtiges Kohlenwasserstoffmedium verwendet, das rückstandsfrei von der Werkstückoberfläche abtrocknet. Entscheidend ist hierbei, dass sich das Nachspülmittel nicht mit dem Glykolether-Lösemittelgemisch vermischt."

Die vorliegende Erfindung stellt sich die Aufgabe, den Stand der Technik Insbesondere Im Hinblick auf den Verbrauch von Entschichtungschemikalien zu verbessern.

Gegenstand der vorliegenden Erfindung ist Anspruch 1

Dabei können bei Bedarf der erste und der zweite Schritt jeweils auch wiederholt durchgeführt werden.

Dieses Entlackungsverfahren in mindestens zwei getrennten Schritten kann chargenweise oder in einer Durchlaufanlage erfolgen. Beim chargenweisen Verfahren können die beiden Verfahrensschritte in demselben oder vorzugsweise in unterschiedlichen Entlackungsbehältern durchgeführt werden. Finden beide Schritte in demselben Entlackungsbehälter statt, wird das erste Entlackungsmittel nach ausreichender Einwirkungszeit entfernt und durch das zweite Entlackungsmittel ersetzt. Für die Aufnahme einer neuen Charge muss dann wiederum das zweite Entlackungsmittel zunächst gegen erstes Entlackungsmittel ausgetauscht werden. Günstiger ist es, zwei getrennte Entlackungsbehälter vorzusehen, wobei sich im ersten Behälter das erste Entlackungsmittel und im zweiten Behälter das zweite Entlackungsmittel befindet. Die zu entlackenden Gegenstände werden dann zuerst im ersten Entlackungsbehälter und anschließend im zweiten Entlackungsbehälter mit dem jeweiligen Entlackungsmittel in Berührung gebracht. Dies kann durch Eintauchen oder Aufspritzen geschehen. Der Prozess kann auch quasi-kontinuierlich in einer Durchlaufanlage ablaufen. Hierbei kommen die zu entlackenden Gegenstände in einer ersten Zone der Durchlaufanlage mit dem ersten Entlackungsmittel und anschließend in einer zweiten Zone der Durchlaufanlage mit dem zweiten Entlackungsmittel in Kontakt. Auch dieser Kontakt kann durch Eintauchen in Behälter mit dem Entlackungsmittel oder durch Bespritzen mit dem Entlackungsmittel erfolgen.

Im ersten Entlackungsmittel wird der Lack zumindest anteilig in Form von makroskopisch erkennbaren Partikeln von der Unterlage abgespalten. Diese haben eine solche Größe, dass sie aus dem Entlackungsmittel mechanisch abgetrennt werden können, beispielsweise durch Sieben oder Filtrieren, Sedimentieren oder Zentrifugieren. Beispielsweise können diese Partikel die Form von Fladen oder Schuppen haben. Dieses Abspalten geschieht hauptsächlich dadurch, dass das Entlackungsmittel in die Lackschicht oder die Lackschichten eindiffundiert, wodurch diese aufquellen und von der Unterlage abspringen. Ein Auflösen von Lack zu einer echten oder kolloidalen Lösung erfolgt nicht oder allenfalls in geringem Ausmaß.

Dieses Abspringen kann in der Grenzschicht zwischen Lack und Substratoberfläche, beispielsweise der Metalloberfläche, oder an der der Grenze zwischen unterschiedlichen Lackschichten erfolgen. Dieser hauptsächlich auf physikalischen Effekten basierende Vorgang führt zu keinem oder zumindest geringem chemischen Verbrauch von Entlackungsmitteln. Das erste Entlackungsmittel kann daher im Wesentlichen dadurch einsatzbereit gehalten werden, dass man aus ihm die abgespaltenden Lackpartikel kontinuierlich oder diskontinuierlich mechanisch entfernt. Dies kann beispielsweise durch Zentrifugieren oder durch geeignete Sieb- oder Filtereinrichtungen erfolgen. Oder man entfernt die Lackpartikel durch Sedimentation. Da sich das erste Entlackungsmittel praktisch nicht chemisch verbraucht, muss lediglich soviel Entlackungsmittel nachgegeben werden, wie beim Austragen der Lackpartikel verloren geht.

Dem gegenüber wird im zweiten Schritt b) die verbliebene Lackschicht zumindest teilweise unter Einwirkung des zweiten Entlackungsmittels zu einer echten oder kolloidalen Lösung aufgelöst. Dies kann durch physikalisches Auflösen von Lackbestandteilen oder durch deren chemische Spaltung erfolgen. Hierbei können unlösliche Lackbestandteile wie beispielsweise Pigmente aus der aufgelösten Lackschicht freigesetzt werden, die als Schlamm abgeschieden werden können. Bei diesem Löseprozess kann sich auch ein Teil des Lacks partikelförmig ablösen.

Da die Menge des Lacks, die unter Bildung einer echten oder kolloidalen Lösung von der Substratoberfläche abgelöst werden muss, durch den ersten Verfahrensschritt deutlich verringert wurde, ist der (chemische) Verbrauch des zweiten Entlackungsmittels gegenüber konventionellen Verfahren deutlich reduziert. Hierdurch verringert sich der Gesamtverbrauch an Entlackungsmitteln und in der Regel auch die für eine vollständige Entlackung erforderliche Zeitdauer.

Für die beiden getrennten Entlackungsschritte kann die Temperatur des jeweiligen Entlackungsmittels als Kompromiss zwischen Entlackungswirkung und Energieverbrauch für jeden Schritt getrennt optimiert werden. Das erste Entlackungsmittel weist vorzugsweise eine Temperatur im Bereich von etwa 30.°C bis etwa 80°C auf. Die Temperatur des zweiten Entlackungsmittels liegt vorzugsweise im Bereich von 50°C bis 1 °C unterhalb seines Flammpunkts, vorzugsweise bis 130°C, wenn der Flammpunkt darüber liegt. Dabei ist es generell günstig, im zweiten. Entlackungsmittel eine höhere Temperatur als im ersten Entlackungsmittel einzustellen. Die Entlackungsdauer für praktische Anwendungsfälle beträgt in jedem der beiden Schritte vorzugsweise zwischen etwa 10 und etwa 60 Minuten. Bei besonders einfachen oder besonders schwierigen Entlackungsvorgängen können die Zeiten jedoch auch darunter oder darüber liegen.

Bei der praktischen Durchführung des erfindungsgemäßen Verfahrens lösen sich in der Regel etwa 20% bis etwa 80% des Lacks im ersten Schritt und entsprechend etwa 80% bis etwa 20% des Lacks im zweiten Schritt ab. Vorzugsweise führt man das Verfahren so durch, dass im ersten Schritt mehr als 50%, insbesondere mehr als 70% des gesamten Lacks abgelöst wird. Dies ist vorteilhaft im Hinblick auf den Gesamtverbrauch an Entlackungsmittel. Steuern lässt sich dies durch eine entsprechende Wahl von Entlackungsdauer und Entlackungstemperatur im ersten Schritt.

Für den ersten Schritt wird ein Entlackungsmittel eingesetzt, das substituiertes oder unsubstituiertes Methylpyrrolidon enhält. Unter einem substituierten Methylpyrrolidon wird dabei eine solche Verbindung verstanden, bei der eines oder mehrere Wasserstoff-Atome des Pyrrolldon-Rings durch andere Atomgruppen ersetzt sind. Dabei kann das unsubstituierte oder substituierte Methylpyrrolidon das vollständige erste Entlackungsmittel darstellen. Man kann das Methylpyrrolidon jedoch mit weiteren organischen Lösungsmitteln wie beispielsweise unsubstituiertem oder substituiertem Benzylalkohol und/oder mit Glykolether versetzen. Die Glykolether stellen vorzugsweise Polyethylenglykole oder Polypropylenglykole dar. Die terminalen OH-Gruppen können durch Endgruppen wie beispielsweise Alkylgruppen verschlossen sein. Hierbei wählt man vorteilhaft organische Lösungsmittel aus, die einen Flammpunkt von oberhalb von 60°C aufweisen. Die Wirkung des ersten Entlackungsmittels kann durch einen Zusatz von alkalischen Substanzen wie beispielsweise Alkalimetallhydroxiden oder Aminen verbessert werden Jedoch soll das erste Entlackungsmittel seine Eigenschaft behalten, vorzugsweise durch Absprengen des Lacks von der Unterlage, insbesondere aufgrund von Quellung, und weniger durch physikalisches oder chemisches Auflösen von Lackbestandteilen wie beispielsweise chemischen Angriff auf das Bindemittel-System des Lackes zu wirken.

Als zweites Entlackungsmittel Produkte eingesetzt werden, die Glykolether und alkalisch wirkende Verbindungen enthalten. Im einfachsten Falle besteht das zweite Entlackungsmittel ausschließlich aus Glykolether und diesen alkalisch wirkenden Verbindungen. Die alkalisch wirkenden Verbindungen können beispielsweise ausgewählt sein aus Alkalimetalhydroxiden, Aminen und Alkanolaminen. Die Glykolether stellen vorzugsweise Polyethylenglykole oder Polypropylenglykole dar. Die terminalen OH-Gruppen können durch Endgruppen wie beispielsweise Alkylgruppen verschlossen sein.

Ein mechanisches Abspringen von Lackpartikeln als Partikel kann auch im zweiten Schritt zusätzlich zu einem physikalischen oder chemischen Auflösen von Lackbestandteilen erfolgen. Dies geschieht beispielsweise dadurch, dass das zweite Entlackungsmittel die im ersten Schritt bereits angegriffene Lackschicht leichter unterwandert. Durch Auflösen von Lackanteilen in der Unterwanderungszone kann die darüber liegende Lackschicht abgesprengt werden.

Das erfindungsgemäße Verfahren kann beispielsweise zum Entlacken von Gegenständen aus Aluminium und/oder Magnesium eingesetzt werden. Um einen chemischen Beizangriff auf diese Metalle zu vermeiden, ist es bevorzugt, dass das erste und insbesondere das zweite Entlackungsmittel möglichst wenig, vorzugsweise nicht mehr als etwa 1 Gew.-% an Wasser enthält. Zumindest soll das erste und das zweite Entlackungsmittel nicht mehr als 10 Gew.-%, vorzugsweise nicht mehr als 5 Gew.-% Wasser enthalten. Außerdem können dem ersten und dem zweiten Entlackungsmittel, insbesondere dem zweiten Entlackungsmittel Korrosionsinhibitoren wie beispielsweise Silikate, Borate oder organische Phosphonsäuren zugesetzt werden. Eine unerwünschte Anreicherung von Wasser im ersten und insbesondere im zweiten Entlackungsmittel lässt sich beispielsweise dadurch verhindern, dass man die Temperatur des Entlackungsmittels im oberen Drittel des vorstehend genannten Temperaturbereichs hält. Hierbei wird, besonders bei Spritzverfahren, Wasser verdampft und hierdurch aus dem Entlackungsmittel entfernt.

Vorzugsweise werden die entlackten Gegenstände nach dem zweiten Schritt gespült. Hierfür können beispielsweise Kohlenwasserstoffe verwendet werden, wie in DE-A-1986133 näher beschrieben ist.

Wenn auf weitgehende Wasserfreiheit des ersten und insbesondere des zweiten Entlackungsmittel geachtet wird, ist das erfindungsgemäße zweistufige Verfahren insbesondere zum Entlacken von Gegenständen geeignet, die zumindest anteilig aus Aluminium, Magnesium, Legierungen von Aluminium oder Legierungen von Magnesium bestehen. Generell können die zu entlackenden Gegenstände Teile von Fahrzeugen, insbesondere Radfelgen darstellen. Ein spezielles Anwendungsgebiet ist die Entlackung von Radfelgen, die aus Aluminium, Magnesium, Aluminium-Legierungen oder Magnesium-Legierungen bestehen.

Der zu entfernende Lack auf diesen Gegenständen kann einen mehrschichtigen Aufbau aufweisen und beispielsweise aus Grundierung, Basislack und Klarlack bestehen.

Das vorgeschlagene zweistufige Verfahren kann bei oberflächliger Betrachtung als umständlicher angesehen werden als die bekannten einstufigen Verfahren. Dadurch aber, dass man die beiden Grundprozesse beim Entlacken, das eher physikalische Aufquellen und Abspringen der Lackschicht einerseits und das eher chemische Auflösen des Bindemitttels andererseits in zwei getrennten Stufen jeweils optimiert durchführt, wird insgesamt der Verbrauch an Entlackungschemikalien verringert. Dies liegt insbesondere daran, dass beim ersten Schritt ein allenfalls geringer chemischer Angriff und damit ein geringer chemischer Verbrauch von Entlackungschemikalien stattfindet. Der im ersten Schritt physikalisch entfernte Lackanteil kommt im zweiten Schritt nicht mehr mit dem mehr chemisch wirkenden zweiten Entlackungsmittel in Berührung. Er trägt daher nicht mehr zum chemischen Verbrauch des zweiten Entlackungsmittels bei. Hierdurch verringert sich der Gesamtverbrauch an Entlackungsmittel gegenüber herkömmlichen Verfahren um bis zu einem Faktor von 5. Bei günstiger Verfahrensführung reduziert sich auch die Gesamtzeit für den Entlackungsprozess.

## Patentansprüche

1. Verfahren zum Entlacken von Gegenständen, **dadurch gekennzeichnet, dass** es in mindestens zwei Schritten erfolgt, wobei in einem ersten Schritt a) mit Hilfe eines ersten Entlackungsmittels enthaltend substituiertes oder unsubstituiertes Methylpyrrolidon ein Anteil des Lacks in Form von Lackpartikeln von der Unterlage abgespalten und in einem zweiten Schritt b) mit Hilfe eines zweiten Entlackungsmittels enthaltend Glykolether und alkalisch wirkende Verbindungen der nach dem Schritt a) noch am Werkstück haftende Anteil des Lacks durch zumindest teilweises Auflösen abgelöst wird.

2. Verfahren nach Anspruch 1, **dadurch gekennzeichnet, dass** aus dem ersten Entlackungsmittel die abgespaltenen Lackpartikel kontinuierlich oder diskontinuierlich mechanisch entfernt werden.

3. Verfahren nach einem oder beiden der Ansprüche 1 und 2, **dadurch gekennzeichnet, dass** das erste Entlackungsmittel eine Temperatur im Bereich von 30 °C bis 80 °C und das zweite Entlackungsmittel eine Temperatur im Bereich von 50 °C bis 1 °C unterhalb seines Flammpunkts aufweisen.

4. Verfahren nach einem oder mehreren der Ansprüche 1 bis 3, **dadurch gekennzeichnet, dass** das erste und das zweite Entlackungsmittel nicht mehr als 10 Gew.-%, vorzugsweise nicht mehr als 5 Gew.-% Wasser enthalten.

5. Verfahren nach einem oder mehreren der Ansprüche 1 bis 4, **dadurch gekennzeichnet, dass** die Gegenstände nach dem zweiten Schritt gespült werden.

6. Verfahren nach einem oder mehreren der Ansprüche 1 bis 5, **dadurch gekennzeichnet, dass** die Gegenstände zumindest anteilig aus Aluminium, Magnesium, Aluminium-Legierungen oder Magnesium-Legierungen bestehen.

7. Verfahren nach einem oder mehreren der Ansprüche 1 bis 6, **dadurch gekennzeichnet, dass** die Gegenstände Teile von Fahrzeugen, insbesondere Radfelgen darstellen.

## Claims

1. A method for stripping paint off objects, **characterized in that** it takes place in at least two steps, wherein, in a first step a), a portion of the paint in the form of the paint particles is split off from the substrate by means of a first paint-stripping agent, containing substituted or non-substituted methyl pyrrolidone and in a second step b), the portion of the paint still adhering to the workpiece after step a) is at least detached by means of a second paint-stripping agent containing glycol ether and compounds with an alkali effect by at least partial dissolution.

2. The method according to claim 1, **characterized in that** the split-off paint particles are mechanically removed from the first paint stripping agent continuously or batchwise.

3. The method according to one or both of claims 1 and 2, **characterized in that** the first paint-stripping agent has a temperature in the range from 30°C to 80°C and the second paint-stripping agent has a temperature in the range from 50°C to 1°C below its flashpoint.

4. The method according to one or several of claims 1 to 3, **characterized in that** the first and the second paint-stripping agents do not contain more than 10% by weight, preferably not more than 5% by weight of water.

5. The method according to one or several of claims 1 to 4, **characterized in that** the objects are rinsed after the second step.

6. The method according to one or several of claims 1 to 5, **characterized in that** the objects at least partly consist of aluminium, magnesium, aluminium alloys or magnesium alloys.

7. The method according to one or several of claims 1 to 6, **characterized in that** the objects represent parts of vehicles, in particular wheel rims.

## Revendications

1. Procédé pour enlever la peinture d'objets, **caractérisé en ce qu'**il est mis en oeuvre en au moins deux étapes, dans lequel, dans une première étape a), au moyen d'un premier agent d'enlèvement de peinture contenant de la méthylpyrrolidone substituée ou non substituée, on détache du substrat une fraction de la peinture sous la forme de particules de peinture et, dans une deuxième étape b), au moyen d'un deuxième agent d'enlèvement de peinture contenant de l'éther de glycol et des composés agissant à la manière de substances alcalines, on élimine la fraction de la peinture qui adhère encore à l'ouvrage après l'étape a), par dissolution au moins partielle.

2. Procédé selon la revendication 1, **caractérisé en ce qu'**on élimine par voie mécanique, en continu ou en discontinu, les particules de peinture détachées à partir du premier agent d'enlèvement de peinture.

3. Procédé selon l'une quelconque des revendications 1 et 2 ou les deux, **caractérisé en ce que** le premier agent d'enlèvement de peinture présente une température dans la plage de 30 °C à 80 °C et le deuxième agent d'enlèvement de peinture présente une température dans la plage de 50 °C à 1 °C en dessous de son point d'inflammation.

4. Procédé selon une ou plusieurs des revendications 1 à 3, **caractérisé en ce que** le premier et le deuxième agent d'enlèvement de peinture ne contiennent pas plus de 10 % en poids, de préférence pas plus de 5 % en poids d'eau.

5. Procédé selon une ou plusieurs des revendications 1 à 4, **caractérisé en ce que** les objets sont rincés après la deuxième étape.

6. Procédé selon une ou plusieurs des revendications 1 à 5, **caractérisé en ce que** les objets sont constitués au moins en partie d'aluminium, de magnésium, par des alliages à base d'aluminium ou par des alliages à base de magnésium.

7. Procédé selon une ou plusieurs des revendications 1 à 6, **caractérisé en ce que** les objets représentent des pièces de véhicules automobiles, en particulier des jantes de roues.
